# EUROPEAN PATENT APPLICATION

(11) **EP 3 238 794 A1**
(43) Date of publication of application: **01.11.2017**
(21) Application number: 16180423.2
(22) Date of filing: 20.07.2016
(51) Int. Cl.: A63F 9/30

(54) **INTERACTIVE OBJECT GRABBING MACHINE**

(30) Priority: 27.04.2016 TW 105113176
(71) Applicant: Paokai Electronic Enterprise Co., Ltd., Kaohsiung City (TW)
(72) Inventor: WEI, Ming-Shan, Kaohsiung City (TW)
(74) Representative: Lang, Christian

(57) **Abstract**

An interactive object grabbing machine is provided to overcome the poor interaction the of the conventional object grabbing machine. The interactive object grabbing machine includes a housing (1), a grabbing device (2), a touch control device (3) and a processing unit (4). The housing (1) has a chamber (11). The grabbing device (2) is mounted in the chamber (11) and includes an actuating unit (21) and a claw (22). The actuating unit (21) is configured to drive the claw (22) to operate. The touch control device (3) is configured to output a graphical user interface capable of receiving a plurality of touch control instructions. The touch control device (3) generates a plurality of interactive modes according to the touch control instructions. The processing unit (4) is connected to the grabbing device (2) and the touch control device (3). The processing unit (4) controls the actuating unit (21) according to the interactive modes.

## Description

### BACKGROUND OF THE INVENTION

### 1. Field of the Invention

The present disclosure generally relates to an object grabbing machine and, more particularly, to an interactive object grabbing machine.

### 2. Description of the Related Art

Conventional object grabbing machines permit a user to grab objects by controlling a claw. Taking a doll grabbing machine as an example, the doll grabbing machine generally includes a body including a chamber in an upper portion thereof. A sliding rod unit is mounted in the chamber and includes a claw. An operating portion is disposed on a lower portion of the body and includes a joystick and a button. An example of the doll grabbing machine is disclosed in Taiwan Utility Model No. M415731 entitled "IMPROVED TRACK STRUCTURE OF AN AMUSEMENT MACHINE".

A user can hold the joystick and apply a force with the wrist to move the joystick in a direction. When the claw reaches an appropriate position, the button can be pressed to lower the claw for grabbing an object in the chamber. Then, the claw is lifted and moved to a position above an opening. If an object is grabbed by the claw, the object will fall through the opening to a hatch at a lower end of the body.

However, the user enjoys grabbing the object only from the processes of controlling the movement of the claw, descending the claw, closing the claw to catch the object, and ascending the claw. These processes are highly common and lack of interaction. As such, the conventional object grabbing machine can no longer attract people.

Due to the lack of interactive function, it is necessary to improve the conventional object grabbing machine.

### SUMMARY OF THE INVENTION

It is therefore the objective of this disclosure to provide an interactive object grabbing machine with an improved interaction function.

It is another objective of this disclosure to provide a control method of the interactive object grabbing machine.

In an embodiment of the disclosure, an interactive object grabbing machine including a housing, a grabbing device, a touch control device and a processing unit is disclosed. The housing has a chamber. The grabbing device is mounted in the chamber and includes an actuating unit and a claw coupled to the actuating unit. The actuating unit is configured to drive the claw to operate. The touch control device is configured to output a graphical user interface capable of receiving a plurality of touch control instructions. The touch control device generates a plurality of interactive modes according to the plurality of touch control instructions. The processing unit is electrically connected to the grabbing device and the touch control device. The processing unit controls the actuating unit according to the plurality of interactive modes, thereby controlling an operational pattern of the claw.

In another embodiment of the disclosure, a control method of an interactive object grabbing machine is disclosed. The interactive object grabbing machine includes a housing, a grabbing device, a touch control device and a processing unit. The housing has a chamber. The grabbing device is mounted in the chamber and includes an actuating unit and a claw coupled to the actuating unit. The actuating unit is configured to drive the claw to operate. The processing unit is electrically connected to the grabbing device and the touch control device. The control method may include outputting a graphical user interface for receiving a plurality of touch control instructions, as performed by the touch control device. The control method may further include generating a plurality of interactive modes according to the plurality of touch control instructions, as performed by the touch control device. The control method may further include controlling the actuating unit according to the plurality of interactive modes, as performed by the processing unit, thereby controlling an operational pattern of the claw.

In a form shown, the plurality of touch control instructions may include a movement instruction, and the touch control device may display the graphical user interface for receiving the movement instruction. The touch control device generates a movement signal based on the movement instruction, such that the processing unit controls the claw through the actuating unit to move horizontally based on the movement signal. The plurality of touch control instructions may include a grabbing instruction. The graphical user interface may include a grabbing icon for receiving the grabbing instruction. The touch control device generates a plurality of circularly-arranged parameters according to the grabbing instruction. The processing unit is configured to perform a grabbing and running mode or a full-power grabbing mode according to the plurality of circularly-arranged parameters. As such, the amusement function can be enhanced through different interactive modes.

In the form shown, the processing unit may generate a full-power grabbing signal in the full-power grabbing mode to control the claw through the actuating unit to make a grabbing movement in a full power. As such, the user can successfully grab the desired object through the full power of the claw.

In the form shown, in the grabbing and running mode, the processing unit may control the claw through the actuating unit to descend, make a grabbing movement and ascend, and may control the touch control device to display a first graphical user interface icon moving to a destination in a direction. If the destination is an amphitheatre, the processing unit generates a competing mode and the touch control device displays a plurality of predefined schemes. Then, the processing unit selects one of the plurality of predefined schemes in a random manner, and the touch control device displays the selected predefined scheme. The plurality of predefined schemes includes a one-more-chance scheme, a two-more-chance scheme, a three-more-chance scheme, a point collection scheme and a non-rewarding scheme. In the one-more-chance scheme, the two-more-chance scheme, and the three-more-chance scheme, the processing unit sets a number of times of grabbing movement as M. M=1 in the one-more-chance scheme, M=2 in the two-more-chance scheme, and M=3 in the three-more-chance scheme. The touch control device receives another M grabbing instruction(s) to control the claw through the actuating unit to descend, make a grabbing movement and ascend for M time(s).

In the form shown, in the point collection scheme, the processing unit sets a point-collecting parameter and increases a value of the point-collecting parameter by 1. The touch control device is configured to display the value of the point-collecting parameter. If the value of the point-collecting parameter reaches a predetermined number, the processing unit generates a lottery scheme and resets the value of the point-collecting parameter.

In the form shown, in the lottery scheme, the processing unit displays a plurality of second graphical user interface icons on the touch control device for selection. The plurality of second graphical user interface icons corresponds to a plurality of predetermined schemes. After one of the plurality of second graphical user interface icons is selected, the touch control device displays a corresponding one of the plurality of predetermined schemes. The corresponding one of the plurality of predetermined schemes is the one-more-chance scheme, the two-more-chance scheme, the three-more-chance scheme, or the non-rewarding scheme. In the one-more-chance scheme, the two-more-chance scheme, and the three-more-chance scheme, the processing unit sets a number of times of grabbing movement as M. M=1 in the one-more-chance scheme, M=2 in the two-more-chance scheme, and M=3 in the three-more-chance scheme. The touch control device receives another M grabbing instruction(s) to control the claw through the actuating unit to descend, make a grabbing movement and ascend for M time(s). As such, the user can receive some welfare in a random manner and can have more fun with the game, thereby enhancing the achievement of the user.

In the form shown, in the point collection scheme, the processing unit sets a point-collecting parameter and increases a value of the point-collecting parameter by 1. The touch control device is configured to display the value of the point-collecting parameter. If the value of the point-collecting parameter reaches a predetermined number, the processing unit generates a lottery scheme and resets the value of the point-collecting parameter. In the lottery scheme, the processing unit displays a plurality of second graphical user interface icons on the touch control device for selection. The plurality of second graphical user interface icons corresponds to a plurality of predetermined schemes. After one of the plurality of second graphical user interface icons is selected, the touch control device displays a corresponding one of the plurality of predetermined schemes. The corresponding one of the plurality of predetermined schemes is the one-more-chance scheme, the two-more-chance scheme, the three-more-chance scheme, or the non-rewarding scheme. As such, the user can receive some welfare in a random manner and can have more fun with the game, thereby enhancing the achievement of the user.

In the form shown, the processing unit may be electrically connected to a wireless communication transceiver, at least one image pickup element, a broadcasting device and a lighting module. An opening is arranged on an inner wall of the housing, and the opening is in communication with a hatch. As such, the wireless communication transceiver can send the processing record of the processing unit or the image picked by the image pickup element to a remote device. The wireless communication transceiver may also permit the remote device to send parameters to the processing unit for updating the control program or the parameters of the processing unit. As such, the time and human labor for updating information can be reduced.

Based on the above interactive object grabbing machine and its control method, the user simply needs to select a certain GUI icon of the touch control device in a single point of touch, so that the processing unit can display different interactive modes (including the grabbing and running mode and the full-power grabbing mode) on the touch control device. As such, the actuating unit can be controlled to change the operational pattern of the claw, such as controlling the claw to descend, ascend and make a grabbing movement different numbers of times. Thus, the entertaining effect is improved and the user will be willing to play the game more. As an advantage, the above embodiments of the present disclosure can achieve easy control and increase the interaction. When used in amusement, the disadvantage of poor maneuverability of the conventional joystick type game machines can be mitigated, such that the users who are looking for a novel way of playing the game can have fun with grabbing objects, further increasing the demand.

### BRIEF DESCRIPTION OF THE DRAWINGS

The present disclosure will become more fully understood from the detailed description given hereinafter and the accompanying drawings which are given by way of illustration only, and thus are not limitative of the present disclosure, and wherein:
FIG. 1 is a perspective view of an interactive object grabbing machine according to a first embodiment of the disclosure.
FIG. 2 shows a first graphic user interface of the interactive object grabbing machine of the first embodiment of the disclosure.
FIG. 3 shows a second graphic user interface of the interactive object grabbing machine of the first embodiment of the disclosure.
FIG. 4 shows a third graphic user interface of the interactive object grabbing machine of the first embodiment of the disclosure.
FIG. 5 shows a fourth graphic user interface of the interactive object grabbing machine of the first embodiment of the disclosure.
FIG. 6 shows a fifth graphic user interface of the interactive object grabbing machine of the first embodiment of the disclosure.
FIG. 7 shows a sixth graphic user interface of the interactive object grabbing machine of the first embodiment of the disclosure.

In the various figures of the drawings, the same numerals designate the same or similar parts. Furthermore, when the terms "first", "second", "third", "fourth", "inner", "outer", "top", "bottom", "front", "rear" and similar terms are used hereinafter, it should be understood that these terms have reference only to the structure shown in the drawings as it would appear to a person viewing the drawings, and are utilized only to facilitate describing the disclosure.

### DETAILED DESCRIPTION OF THE INVENTION

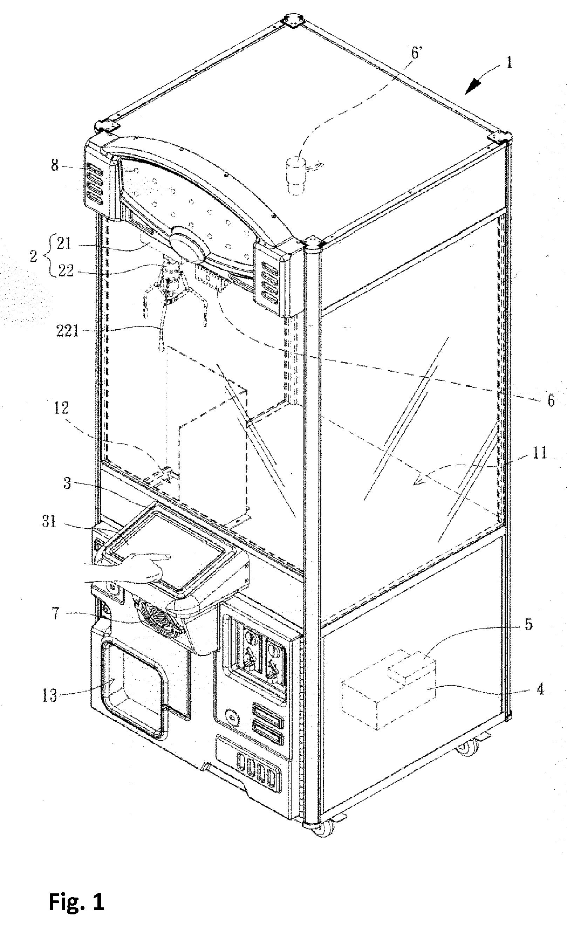

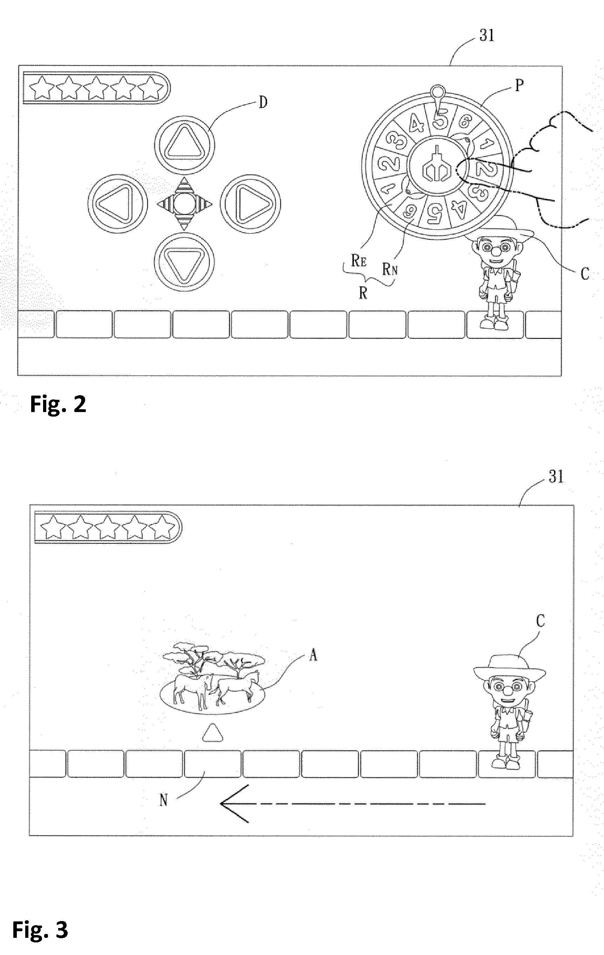

The term "touch control" as used herein refers to the touch behavior of a user using a limb or a tool to touch a human-machine interface of a touch screen, such as tapping or sliding (see FIGS. 1 and 2), and the touch screen generates a control signal based on the touch behavior. For example, the positional coordinate and the length of time of tapping or sliding are used to control the behavior of a controlled object, such as controlling the movement of a claw, which can be appreciated by a person having ordinary skill in the art.

FIG. 1 is a perspective view of an interactive object grabbing machine according to an embodiment of the disclosure. The interactive object grabbing machine may include a housing 1, a grabbing device 2, a touch control device 3 and a processing unit 4. The grabbing device 2 is mounted in the housing 1. The grabbing device 2 and the touch control device 3 are electrically connected to the processing unit 4, such that the user can grab the object (such as a doll, an ornament, an electric product or other objects) with a touch control function.

In the embodiment, the housing 1 may be of a structure of any conventional object grabbing machine. The housing 1 may include a chamber 11 for arrangement of the grabbing device 2. The grabbing device 2 may include an actuating unit 21 and a claw 22. The claw 22 may couple with the actuating unit 21. The actuating unit 21 can be any device capable of converting electric energy into power in order to control the claw 22 to grab an object in the chamber 11. The touch control device 3 may be any electronic device with a touch control function, such as a touch panel. The touch control device 3 is used to generate a graphical user interface (GUI) through which the user can input one or more instructions in a touch control manner. For example, the user can touch a certain area of the graphical user interface with the finger (as shown in FIG. 2). As such, the touch control device 3 may generate different interactive modes according to different touch control instructions. For example, through the touch control device 3, the user can control the claw 22 to move horizontally, to descend and ascend, or to open and close its legs 221. The user may also select different GUI icons through the touch control device 3. The processing unit 4 may be any electronic device with data storage function, calculation function and signal generation function, such as a programmable logic controller (PLC), a digital signal processor (DSP), a microcontroller unit (MCU), or a circuit board having the above functions. The processing unit 4 is electrically connected to the grabbing device 2 and the touch control device 3. The processing unit 4 is able to execute a control program and to store the required data and parameters in a storage device. The processing unit 4 is able to control the actuating unit 21 according to different interactive modes. As such, different operations of the claw 22 can be achieved. For example, the processing unit 4 can control the claw 22 to move horizontally and vertically and then make a grabbing movement (in which the claw 22 opens and closes its legs 221). The above operations can be repeated several times to allow the user to have more than one chance in grabbing the object.

Furthermore, a control method of the interactive object grabbing machine is provided according to a second embodiment of the disclosure. In the interactive object grabbing machine, the processing unit 4 is electrically connected to the grabbing device 2 and the touch control device 3. The grabbing device 2 includes the actuating unit 21 and the claw 22 in the chamber 11 of the housing 1. The claw 22 is coupled with the actuating unit 21 which operates the claw 22. In the control method, the touch control device 3 may output the graphic user interface so that the user can input one or more instructions in a touch control manner. The touch control device 3 may generate different interactive modes according to different touch control instructions. The processing unit 4 may control the actuating unit 21 according to different interactive modes, thus controlling the operational pattern of the claw 22. The control method of the interactive object grabbing machine according to the second embodiment of the disclosure is described in detail below. However, it is not used to limit the disclosure.

As shown in FIG. 1, when the interactive object grabbing machine and its control method are used for amusement purposes, an opening 12 may be arranged on the inner wall of the housing 1. The opening 12 is in communication with a hatch 13 for the user to collect the object that is dispensed through the hatch 13. In addition, the skilled person in the art would readily appreciate the principle on how the claw 22 operates the actuating unit 21. For example, the actuating unit 21 may include a plurality of guiding rods (including rectilinear guiding rods or screw rods) arranged in an upper location of the chamber 11. The plurality of guiding rods can guide a sliding track device to move along a certain path. The claw 22 is fixed to the sliding track device via a base. The claw 22 may be operated by at least one power element (such as a motor). For example, the sliding track device can be actuated to move the claw 22 horizontally in the chamber 11. In this regard, the claw 22 can move vertically through the use of a cord, and follower members (such as pivotal members) can be used to permit opening and closing of the legs 221 of the claw 22 for grabbing and moving an object in the chamber 11 to a position above the opening 12 through which the object can fall. However, this is not used to limit the disclosure.

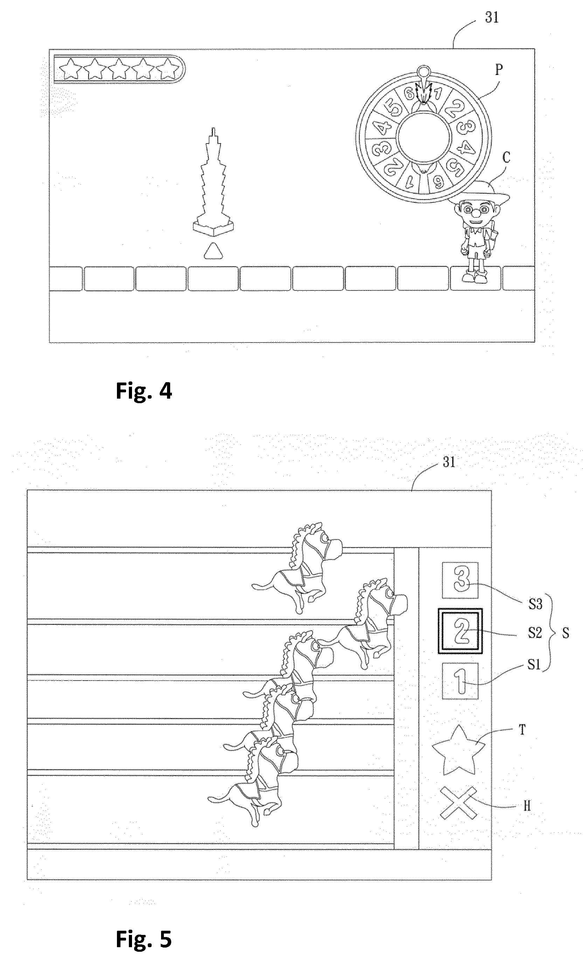

In the example, the touch control device 3 may be mounted on the outer face of the housing 1, such as the front or lateral face of the housing 1. The graphical user interface of the touch control device 3 may be output to a human-computer interface 31, such that the user can input a movement instruction to the human-computer interface 31. For example, the movement instruction may be generated from a movement trajectory or by the user touching either of the direction icons D. The touch control device 3 may generate a movement signal based on the movement instruction such that the processing unit 4 can control the claw 22 to move horizontally via the actuating unit 21. The user may input a grabbing instruction to the human-computer interface 31 to control the claw 22 to perform a series of actions required to grab the object, including descending the claw 22, closing the claw 22 to catch the object, ascending the claw 22, and moving the claw 22 over the opening 12. The grabbing instruction may be generated by the user touching a grabbing icon P with the finger, such that the touch control device 3 may generate a plurality of circularly-arranged parameters. As the example shown in FIG. 2, the roulette includes a plurality of numbers **R_{N}** (from 1 to 6) and at least one interval **R_{E}** (between 1 and 6). Each of the elements **R_{N}/R_{E}** corresponds to a respective one of the plurality of circularly-arranged parameters. The roulette is initially rotating and the user can touch the rotating roulette with the finger so that the needle of the roulette will point to one of the areas **R_{N}** and **R_{E}** when the roulette stops. If the needle points to one of the numbers **R_{N}** (such as "5" as shown in FIG. 2), the processing unit 4 may perform a grabbing and running mode (as shown in FIG. 3) in which the user is permitted to make a grabbing movement for the desired object while the user is given an extra game where a GUI icon C (shown as a cartoon figure in FIG. 3) can move in a direction (indicated by the arrow) the corresponding number **R_{E}** of squares. In the grabbing and running mode, the processing unit 4 can control the claw 22 to descend, ascend and make a grabbing movement through the actuating unit 21, and controls the cartoon figure C to advance to a certain square N (i.e. the destination). In another case, if the needle points to one of the at least one interval **R_{E}** as shown in FIG. 4, the processing unit 4 may perform a full-power grabbing mode where the processing unit 4 generates a full-power grabbing signal to control the claw 22 to grab the object in a full power. In the full-power grabbing mode, the claw 22 will operate under a maximum power.

If the square N indicates an amphitheatre **A** (as shown in FIG. 3), the processing unit 4 can generate a competing mode as shown in FIG. 5. In this regard, the touch control device 3 can display a plurality of predefined schemes, and one of the schemes will be selected in a random manner. The selected result S is displayed by the touch control device 3.

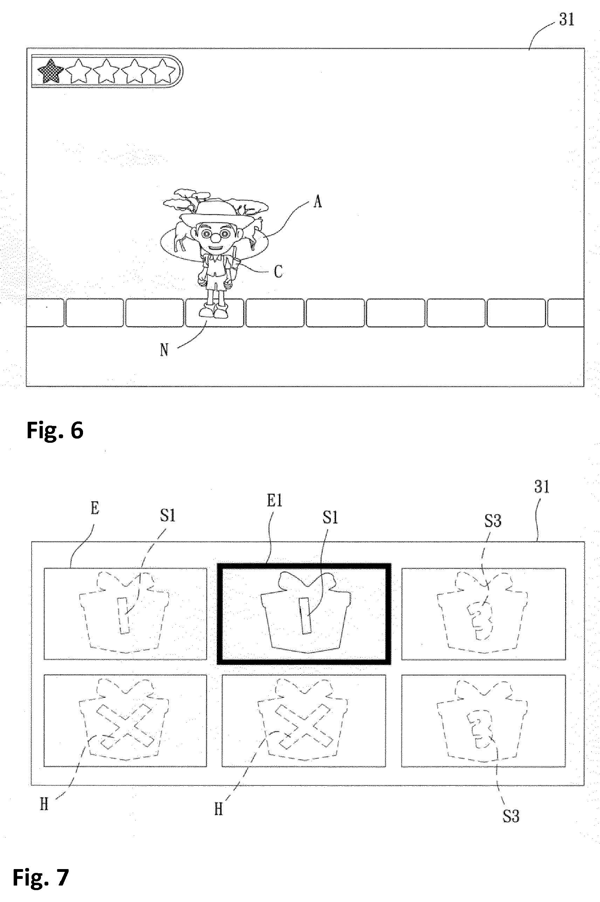

The plurality of predefined schemes may include an one-more-chance scheme where the user is given one more chance (for free) to try grabbing the object again (such as **S1** in FIG. 5), a two-more-chance scheme where the user is given two more chances (for free) to try grabbing the object again (such as **S2** in FIG. 5), a three-more-chance scheme where the user is given three more chances (for free) to try grabbing the object again (such as **S3** in FIG. 5), a point collection scheme where the user is given one point for collection (such as T in FIG. 5), and a non-rewarding scheme where no benefit has been received by the user (such as **H** in FIG. 5). In the one-more-chance scheme **S1,** the processing unit 4 sets a number of times of grabbing movement as 1 (M=1). In the two-more-chance scheme **S2,** the processing unit 4 sets the number of times of grabbing movement as 2 (M=2). In the three-more-chance scheme **S3,** the processing unit 4 sets the number of times of grabbing movement as 3 (M=3). Based on different numbers of times of grabbing movement, one or more grabbing instructions can be received to control the claw 22 to ascend, descend and make a grabbing movement one or more times again. In the point collection scheme **T,** the processing unit 4 sets a point-collecting parameter and can increase the value of the parameter by 1. The value of the point-collecting parameter can be displayed on the touch control device 3 (as shown in FIG. 6). If the value of the point-collecting parameter reaches a predetermined number (such as 5), the processing unit 4 may generate a lottery scheme (as shown in FIG. 7) and reset the value of the point-collecting parameter. In the lottery scheme, the processing unit 4 may display a plurality of GUI icons **E** corresponding to a plurality of predetermined schemes. Each of the plurality of predetermined schemes may be the one-more-chance scheme, the two-more-chance scheme, the three-more-chance, or the non-rewarding scheme. When the user selects one of the GUI icons **E,** the touch control device 3 can display a corresponding predetermined scheme, which may be the one-more-chance scheme, the two-more-chance scheme, the three-more-chance, or the non-rewarding scheme.

Referring to FIG. 1, when the interactive object grabbing machine is used for amusement, the processing unit 4 can be electrically connected to a wireless communication transceiver 5, at least one image pickup element 6, 6', a broadcasting device 7 and a lighting module 8. The wireless communication transceiver 5 can be a transceiver with wireless communication functions, such as functions of a blue-tooth, IEEE802.11, and/or long-term evolution (LTE). The image pickup element 6, 6' can be a digital image pickup element. The broadcasting device 7 can be a speaker. The lighting module 8 can be a multi-color light-emitting diode or a panel. The wireless communication transceiver 5 sends the processing record of the processing unit 4 or the image picked by the image pickup element 6, 6' to a remote device, such as a cloud server or a mobile operational device. The processing record or the image can be used as a reference for decision making by related personnel. The wireless communication transceiver 5 also permits the remote device to send parameters to the processing unit 4 for updating the control program or the parameters of the processing unit 4, such as the operational pattern of the actuating unit 21, the claw 22, the broadcasting device 7 and the lighting module 8, reducing the time and human labor for updating information. However, the present disclosure is not limited to this example.

Thus, based on the interactive object grabbing machine and its control method according to the first and second embodiments of the disclosure, the user simply needs to select a certain GUI icon of the touch control device 3 in a single point of touch, so that the processing unit 4 can display different interactive modes (including the grabbing and running mode and the full-power grabbing mode) on the touch control device 3. As such, the actuating unit 21 can be controlled to change the operational pattern of the claw 22 (such as controlling the claw 22 to descend, ascend and make a grabbing movement different numbers of times), thereby enhancing the entertaining effect and attracting the user to play the game more. As an advantage, the above embodiments of the present disclosure achieve easy control and increase the interaction. When used in amusement, the disadvantage of poor maneuverability of the conventional joystick type game machines can be mitigated, such that the users who are looking for a novel way of playing the game can have fun with grabbing objects, further increasing the demand.

## Claims

1. An interactive object grabbing machine comprising:
a housing (1) having a chamber (11); and
a grabbing device (2) mounted in the chamber (11) and comprising an actuating unit (21) and a claw (22) coupled to the actuating unit (21), and wherein the actuating unit (21) is configured to drive the claw (22) to operate,
wherein the interactive object grabbing machine is **characterized in** further comprising:
a touch control device (3) configured to output a graphical user interface capable of receiving a plurality of touch control instructions, wherein the touch control device (3) generates a plurality of interactive modes according to the plurality of touch control instructions; and
a processing unit (4) electrically connected to the grabbing device (2) and the touch control device (3), wherein the processing unit (4) controls the actuating unit (21) according to the plurality of interactive modes, thereby controlling an operational pattern of the claw (22).

2. The interactive object grabbing machine as claimed in claim 1, **characterized in that** the plurality of touch control instructions comprises a grabbing instruction, wherein the graphical user interface comprises a grabbing icon for receiving the grabbing instruction, wherein the touch control device (3) generates a plurality of circularly-arranged parameters according to the grabbing instruction, and wherein the processing unit (4) is configured to perform a grabbing and running mode or a full-power grabbing mode according to the plurality of circularly-arranged parameters.

3. The interactive object grabbing machine as claimed in claim 2, **characterized in that**, in the full-power grabbing mode, the processing unit (4) generates a full-power grabbing signal to control the claw (22) through the actuating unit (21) to make a grabbing movement in a full power.

4. The interactive object grabbing machine as claimed in claim 2, **characterized in that**, in the grabbing and running mode, the processing unit (4) controls the claw (22) through the actuating unit (21) to descend, make a grabbing movement and ascend, and controls the touch control device (3) to display a first graphical user interface icon moving to a destination in a direction.

5. The interactive object grabbing machine as claimed in claim 4, **characterized in that**, if the destination is an amphitheatre, the processing unit (4) generates a competing mode and the touch control device (3) displays a plurality of predefined schemes, wherein the processing unit (4) selects one of the plurality of predefined schemes in a random manner, and wherein the touch control device (3) displays the selected predefined scheme.

6. The interactive object grabbing machine as claimed in claim 5, **characterized in that** the plurality of predefined schemes comprises a one-more-chance scheme (S1), a two-more-chance scheme (S2), a three-more-chance scheme (S3), a point collection scheme (T) and a non-rewarding scheme.

7. The interactive object grabbing machine as claimed in claim 6, **characterized in that** the processing unit (4) sets a number of times of grabbing movement as M, wherein M=1 in the one-more-chance scheme, M=2 in the two-more-chance scheme, and M=3 in the three-more-chance scheme, and wherein the touch control device (3) receives another M grabbing instruction(s) to control the claw (22) through the actuating unit (21) to descend, make a grabbing movement and ascend for M time(s).

8. The interactive object grabbing machine as claimed in claim 6, **characterized in that**, in the point collection scheme (T), the processing unit (4) sets a point-collecting parameter and increases a value of the point-collecting parameter by 1, wherein the touch control device (3) is configured to display the value of the point-collecting parameter, wherein, if the value of the point-collecting parameter reaches a predetermined number, the processing unit (4) generates a lottery scheme and resets the value of the point-collecting parameter.

9. The interactive object grabbing machine as claimed in claim 8, **characterized in that**, in the lottery scheme, the processing unit (4) displays a plurality of second graphical user interface icons on the touch control device (3) for selection, wherein the plurality of second graphical user interface icons corresponds to a plurality of predetermined schemes, wherein, after one of the plurality of second graphical user interface icons is selected, the touch control device (3) displays a corresponding one of the plurality of predetermined schemes.

10. The interactive object grabbing machine as claimed in claim 9, **characterized in that** the corresponding one of the plurality of predetermined schemes is the one-more-chance scheme (S1), the two-more-chance scheme (S2), the three-more-chance scheme (S3), or the non-rewarding scheme.

11. The interactive object grabbing machine as claimed in claim 1, **characterized in that** the plurality of touch control instructions comprises a movement instruction, wherein the touch control device (3) displays the graphical user interface for receiving the movement instruction, wherein the touch control device (3) generates a movement signal based on the movement instruction, such that the processing unit (4) controls the claw (22) through the actuating unit (21) to move horizontally based on the movement signal.

12. The interactive object grabbing machine as claimed in claim 1, **characterized in that** the processing unit (4) is electrically connected to a wireless communication transceiver (5) or at least one image pickup element (6, 6').

13. The interactive object grabbing machine as claimed in claim 1, **characterized in that** the processing unit (4) is electrically connected to a broadcasting device (7).

14. The interactive object grabbing machine as claimed in claim 1, **characterized in that** the processing unit (4) is electrically connected to a lighting module (8).

15. The interactive object grabbing machine as claimed in claim 1, **characterized in that** an opening (12) is arranged on an inner wall of the housing (1), wherein the opening (12) is in communication with a hatch (13).

## Amended claims

### Amended claims in accordance with Rule 137(2) EPC.

1. An interactive object grabbing machine comprising:
a housing (1) having a chamber (11); and
a grabbing device (2) mounted in the chamber (11) and comprising an actuating unit (21) and a claw (22) coupled to the actuating unit (21), and wherein the actuating unit (21) is configured to drive the claw (22) to operate;
a touch control device (3) configured to output a graphical user interface capable of receiving a plurality of touch control instructions, wherein the touch control device (3) generates a plurality of interactive modes according to the plurality of touch control instructions; and
a processing unit (4) electrically connected to the grabbing device (2) and the touch control device (3), wherein the processing unit (4) controls the actuating unit (21) according to the plurality of interactive modes, thereby controlling an operational pattern of the claw (22),
**characterized in that** the processing unit (4) is electrically connected to a wireless communication transceiver (5) and at least one image pickup element (6, 6'), wherein the wireless communication transceiver (5) sends a processing record of the processing unit (4) or an image picked up by the at least one image pickup element (6, 6') to a remote device, wherein the processing record of the processing unit (4) or the image picked up by the at least one image pickup element (6, 6') is used as a reference for decision making by related personnel operating the remote device, wherein the wireless communication transceiver (5) permits the remote device to send parameters to the processing unit (4) for updating a control program or parameters of the processing unit (4).

2. The interactive object grabbing machine as claimed in claim 1, **characterized in that** the plurality of touch control instructions comprises a grabbing instruction, wherein the graphical user interface comprises a grabbing icon for receiving the grabbing instruction, wherein the touch control device (3) generates a plurality of circularly-arranged parameters according to the grabbing instruction, and wherein the processing unit (4) is configured to perform a grabbing and running mode or a full-power grabbing mode according to the plurality of circularly-arranged parameters.

3. The interactive object grabbing machine as claimed in claim 2, **characterized in that**, in the full-power grabbing mode, the processing unit (4) generates a full-power grabbing signal to control the claw (22) through the actuating unit (21) to make a grabbing movement in a full power.

4. The interactive object grabbing machine as claimed in claim 2, **characterized in that**, in the grabbing and running mode, the processing unit (4) controls the claw (22) through the actuating unit (21) to descend, make a grabbing movement and ascend, and controls the touch control device (3) to display a first graphical user interface icon moving to a destination in a direction.

5. The interactive object grabbing machine as claimed in claim 1, **characterized in that** the plurality of touch control instructions comprises a movement instruction, wherein the touch control device (3) displays the graphical user interface for receiving the movement instruction, wherein the touch control device (3) generates a movement signal based on the movement instruction, such that the processing unit (4) controls the claw (22) through the actuating unit (21) to move horizontally based on the movement signal.

6. The interactive object grabbing machine as claimed in claim 1, **characterized in that** the processing unit (4) is electrically connected to a broadcasting device (7).

7. The interactive object grabbing machine as claimed in claim 1, **characterized in that** the processing unit (4) is electrically connected to a lighting module (8).

8. The interactive object grabbing machine as claimed in claim 1, **characterized in that** an opening (12) is arranged on an inner wall of the housing (1), wherein the opening (12) is in communication with a hatch (13).
